# FASCICULE DE BREVET EUROPEEN

(11) **EP 1 009 943 B1**
(45) Date de publication et mention de la délivrance du brevet: **02.01.2003**
(21) Numéro de dépôt: 98942814.9
(22) Date de dépôt: 03.09.1998
(51) Int. Cl.: F16H 61/02, F16H 61/06

(54) **PROCEDE POUR AJUSTER LA PROGRESSIVITE D'UN CHANGEMENT DE RAPPORT, ET DISPOSITIF DE TRANSMISSION S'Y RAPPORTANT**
VERFAHREN ZUM STEUERN DES SCHALTRUCKS, UND DAZUGEHÖRENDES GETRIEBE
METHOD FOR ADJUSTING THE SMOOTH ENGAGEMENT OF A GEAR RATIO SHFIT, AND RELATED TRANSMISSION DEVICE

(30) Priorité: 05.09.1997 FR 9711095
(43) Date de publication de la demande: 21.06.2000
(73) Titulaire: Antonov Automotive Technologies B.V., 3013 CH Rotterdam (NL)
(72) Inventeur: ANTONOV, Roumen, F-75006 Paris (FR)
(74) Mandataire: Pontet, Bernard
(86) Numéro de dépôt international: FR9801883
(87) Numéro de publication internationale: WO99013247

(56) Documents cités:
- WO-A-96/06293
- GB-A- 2 032 024
- GB-A- 2 251 041
- US-A- 4 527 678

## Description

La présente invention concerne un procédé pour ajuster la progressivité d'un changement de rapport dans un dispositif de transmission, notamment un dispositif de transmission automatique à rapports multiples.

La présente invention concerne également un dispositif de transmission mettant en oeuvre un tel procédé.

On connaît d'après le WO-A-9207206 une transmission automatique dans laquelle un embrayage relie sélectivement deux organes rotatifs d'un engrenage différentiel tel qu'un train épicycloïdal, selon que l'une ou l'autre de deux forces antagonistes domine. La première force, tendant à desserrer l'embrayage, est par exemple une réaction de denture, plus particulièrement une poussée axiale produite par une denture hélicoïdale montée mobile axialement. La deuxième force, tendant à serrer l'embrayage, peut être produite par des ressorts et/ou par un moyen tachymétrique centrifuge. Lorsque l'embrayage est desserré, il faut empêcher la rotation d'un troisième organe rotatif de l'engrenage différentiel, et cela peut être assuré par une roue libre empêchant ce troisième organe de tourner en inverse.

Ce type de transmission est très avantageux car son fonctionnement de base ne nécessite ni source de puissance extérieure, ni capteurs, ni circuit de pilotage. C'est le dispositif de transmission lui-même qui produit les forces qui vont le piloter et ces forces sont en même temps une mesure des paramètres nécessaires au pilotage.

Pour des transmissions modernes devant procurer un niveau élevé de confort et d'optimisation du fonctionnement, les forces précitées sont avantageusement complétées par des forces d'appoint, produites par exemple par des actionneurs hydrauliques. Les forces d'appoint peuvent servir à modifier à volonté les conditions de vitesse et de couple pour lesquelles la transmission change de rapport, ou encore à bloquer la transmission sur un rapport donné lorsque cela est souhaité (WO-A-94 19 629).

D'un autre côté, il a été constaté selon l'invention que le changement de rapport sous l'action des forces telles qu'une force centrifuge ou une réaction de denture pouvait présenter certains défauts.

Le WO-A-97/08 478 propose des solutions destinées à remédier à certains types de défaut.

Un défaut particulier auquel s'intéresse la présente invention, réside dans la brutalité que peut avoir l'action d'un générateur d'effort non piloté, tel qu'un ressort ou plus encore un générateur de force centrifuge, notamment, dans le cas des transmissions précitées, lorsque la force antagoniste disparaît et libère brusquement le générateur d'effort. Par exemple si la force antagoniste est proportionnelle au couple transmis et que celui-ci disparaît car le conducteur relâche la pédale d'accélérateur, le générateur d'effort non-piloté risque d'actionner brutalement un embrayage et de provoquer un choc dangereux et inconfortable.

Le WO 96/06 293 enseigne d'utiliser le trajet de purge d'un vérin actionneur comme un frein passif empêchant une fermeture trop brusque d'un embrayage par des masselottes centrifuges.

Le GB-A-2 251 041 enseigne de remplacer l'action d'un générateur d'effort non-piloté, en particulier un ressort, par celle d'un actionneur piloté, pendant les opérations de changement d'état de l'embrayage. Cette solution est complexe aussi bien sur le plan structurel que sur le plan de la commande.

Le but de la présente invention est de mieux maîtriser les processus de changement de rapport impliquant l'actionnement d'au moins un moyen d'accouplement sélectif.

Suivant l'invention, le procédé pour ajuster la progressivité de passage d'un rapport de transmission ancien à un rapport de transmission nouveau, dans un dispositif de transmission comprenant :
- un dispositif d'accouplement sélectif entre deux organes rotatifs ;
- un moyen générateur d'effort essentiellement non-piloté pour solliciter le moyen d'accouplement sélectif vers l'un prédéterminé de ses états de glissement et d'adhérence, correspondant au rapport nouveau ;
- un moyen actionneur capable de solliciter le moyen d'accouplement sélectif vers l'autre desdits états, correspondant au rapport ancien ;
est caractérisé en que le procédé comprend, pendant que le moyen générateur actionne le moyen d'accouplement sélectif vers son état correspondant au rapport nouveau, une étape de commande du moyen actionneur pour qu'il produise une force résistante dosée, ralentissant la transition entre le rapport ancien et le rapport nouveau.

A l'aide du moyen actionneur, on contre-balance de manière dosée, systématiquement ou seulement lorsque cela est nécessaire, l'action du moyen générateur d'effort pour empêcher que le moyen générateur d'effort provoque un changement d'état trop brusque dans le dispositif d'accouplement sélectif.

Le dosage de la force contraire appliquée par le moyen actionneur peut être soit un dosage prédéterminé unique soit un dosage prédéterminé choisi parmi une série de dosages prédéterminés, le choix s'effectuant en fonction d'un critère de sélection, par exemple la vitesse de rotation qui détermine l'effet centrifuge si le moyen générateur d'effort est de type centrifuge. Un tel dosage prédéterminé consiste de préférence en une force progressivement décroissante, qui laisse donc progressivement le moyen générateur d'effort solliciter de plus en plus le moyen d'accouplement sélectif vers l'état d'accouplement nouveau.

De préférence, on détecte une grandeur physique sur laquelle influe le passage progressif du rapport de transmission ancien au rapport de transmission nouveau, et on commande le moyen actionneur en fonction du résultat de cette détection.

Dans le cas d'une transmission dans laquelle les changements de rapport s'effectuent spontanément, c'est à dire sans intervention d'une unité de traitement, et par exemple s'effectuent d'après le sens et la valeur de la résultante de différentes forces telles qu'une force centrifuge et une force de réaction de denture indicatrice du couple transmis, la détection de la grandeur physique précitée a pour rôle de détecter qu'un changement de rapport est en cours dans la transmission. En fonction de cette détection, on initie au moins dans certains cas l'action de contre-balancement par le moyen actionneur.

En outre, la détection de la grandeur physique peut servir à réaliser un asservissement de progressivité. On peut par exemple calculer la dérivée du rapport de transmission dans le temps et régler l'action de contre-balancement pour que cette dérivée reste aussi proche que possible d'une valeur de consigne. On peut choisir d'autres consignes que la dérivée. On peut par exemple fixer comme consigne une loi d'évolution du rapport dans le temps.

Lorsque la transmission offre un nombre de rapports de transmission qui est élevé par comparaison avec le nombre de trains d'engrenages utilisés, il y a en général au moins un processus de changement de rapport qui nécessite d'activer un accouplement et d'en relâcher un autre en synchronisant parfaitement ces deux opérations. Toute imperfection de cette synchronisation rend le changement de rapport inconfortable pour les occupants du véhicule et introduit des contraintes et/ou des chocs, générateurs d'usure, dans la transmission.

L'initiation du processus de changement de rapport peut alors être le fait du moyen d'accouplement sélectif que l'on contre-balance comme il vient d'être dit, et ce moyen d'accouplement sélectif peut être celui dont l'actionnement fait varier la vitesse d'entrée du dispositif de transmission dans le sens correspondant au changement de rapport à effectuer. Lorsque la grandeur physique détectée atteint une certaine valeur prédéterminée, l'actionnement de l'autre moyen d'accouplement est à son tour initié.

Comme grandeur physique caractéristique de l'évolution du processus de changement de rapport, il est justement avantageux de choisir la vitesse d'entrée, ou encore le rapport entre la vitesse d'entrée et la vitesse de sortie de la transmission, ou plus généralement deux vitesses dont le rapport est affecté par le processus de changement de rapport concerné.

Dans un tel cas, un asservissement de progressivité régulant le contre-balancement assuré par le moyen actionneur en fonction de l'évolution du rapport de transmission global fourni par les deux mécanismes de transmission va permettre de compenser l'ensemble des imperfections du processus de changement de rapport dans les deux mécanismes. Le résultat global sera donc très satisfaisant malgré la complexité du processus de changement mis en oeuvre.

Un autre avantage de choisir comme grandeur physique une grandeur qui indique l'état de l'ensemble du dispositif de transmission, et non pas seulement l'état d'un sous-ensemble déterminé tel qu'un train épicycloïdal dans un dispositif de transmission qui en comporte plusieurs, et en particulier de choisir comme grandeur physique le rapport entre la vitesse d'entrée et la vitesse de sortie dans la transmission, c'est que cette grandeur indique, d'après la gamme des valeurs dans laquelle elle évolue, quel changement de rapport est en train de s'opérer. Par exemple, dans un dispositif réalisant quatre rapports de transmission avec seulement deux mécanismes épicycloïdaux en série, le passage du premier au deuxième rapport, le passage du troisième au quatrième rapport, et le passage du troisième au deuxième rapport, comportent tous trois la fermeture d'un même embrayage. Grâce à la détection globale, il est possible de distinguer quel est le changement en train de s'opérer et au besoin de modifier les critères d'asservissement en conséquence. En outre, la détection globale permet d'utiliser un même ensemble détecteur pour tous les moyens d'accouplement sélectif pour lesquels on veut appliquer le procédé selon l'invention.

Suivant un second aspect de l'invention, le dispositif de transmission pour véhicule, comprenant :
- au moins un train d'engrenages ;
- un moyen d'accouplement sélectif pouvant, par passage d'un état d'accouplement ancien à un état d'accouplement nouveau, faire passer le train d'engrenage d'un rapport de transmission ancien à un rapport de transmission nouveau ;
- un moyen générateur d'effort essentiellement non-piloté, capable de faire passer le moyen d'accouplement sélectif de l'état d'accouplement ancien à l'état d'accouplement nouveau ;
- un moyen actionneur capable d'exercer sur le moyen d'accouplement sélectif une action vers l'état d'accouplement ancien ;
- des moyens de commande du moyen actionneur ;
est caractérisé en ce que les moyens de commande comprennent des moyens de progressivité pour faire exercer par le moyen actionneur un effort dosé ralentissant le passage du moyen d'accouplement sélectif de l'état d'accouplement ancien à l'état d'accouplement nouveau sous l'action du moyen générateur d'effort.

Dans la suite, de manière classique, on dit qu'un rapport de transmission est "court" lorsqu'il correspond à une forte vitesse de l'entrée par rapport à la vitesse de sortie. Dans le cas contraire, le rapport est dit "long".

D'autres particularités et avantages de l'invention ressortiront encore de la description ci-après, relative à des exemples non-limitatifs.

Aux dessins annexés :
- la figure 1 est une demi-vue en coupe longitudinale schématique d'un dispositif de transmission à deux rapports selon l'invention, au repos ;
- les figures 2 et 3 sont des vues analogues à la figure 1, mais relatives au fonctionnement en réducteur, et respectivement en prise directe ;
- la figure 4 est un diagramme temporel illustrant une version du procédé selon l'invention ;
- la figure 5 est une demi-vue schématique d'un dispositif de transmission à quatre rapports selon l'invention ; et
- les figures 6 et 7 sont des diagrammes temporels illustrant le fonctionnement du mode de réalisation de la figure 5.

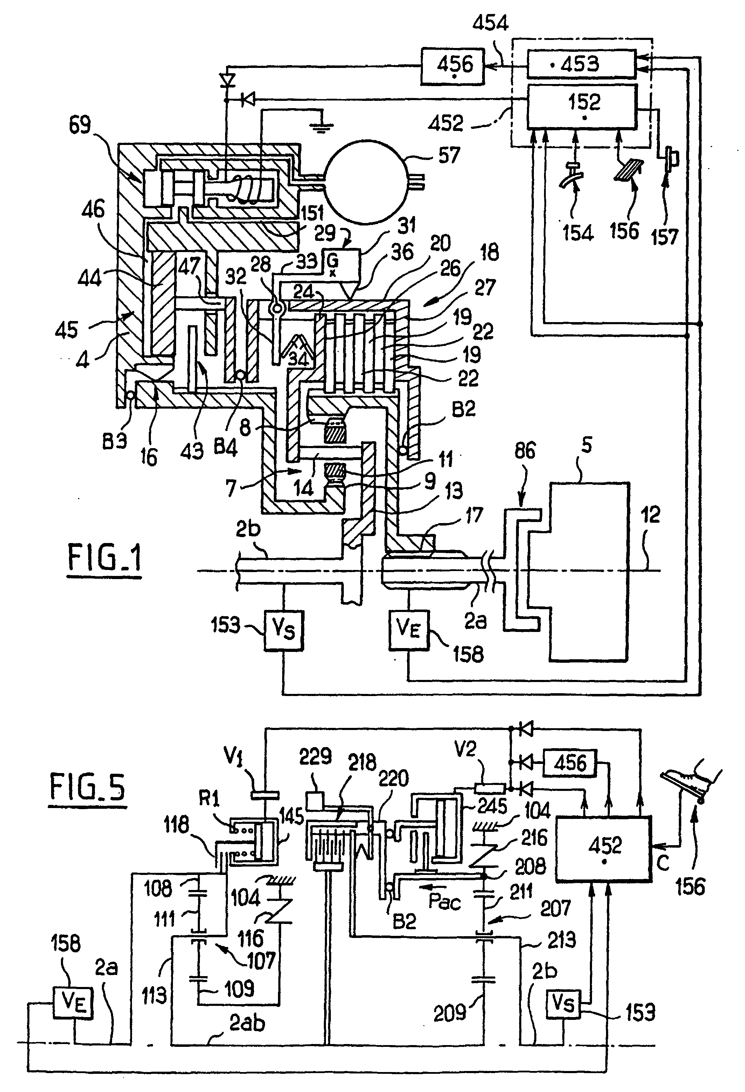

Le dispositif de transmission à deux rapports représenté à la figure 1, destiné en particulier à une automobile, comprend un arbre d'entrée 2a et un arbre de sortie 2b alignés selon l'axe 12 du dispositif. L'arbre d'entrée 2a est relié à l'arbre de sortie du moteur 5 d'un véhicule automobile avec interposition d'un embrayage d'entrée 86 et éventuellement d'autres moyens de transmission non représentés. L'arbre de sortie 2b est destiné à entraîner directement ou indirectement les roues motrices d'un véhicule. Entre l'arbre de sortie 2b et les roues du véhicule peut par exemple être interposé un autre dispositif de transmission à deux ou plusieurs rapports et/ou un inverseur marche avant - marche arrière à commande manuelle, et/ou un différentiel de répartition du mouvement entre les roues motrices du véhicule.

Les arbres d'entrée 2a et de sortie 2b sont immobilisés axialement relativement à un carter 4 du dispositif de transmission, qui n'est que partiellement représenté.

Le dispositif de transmission comprend un engrenage différentiel formé par un train épicycloïdal 7. Le train 7 comprend une couronne 8 à denture intérieure et une roue planétaire 9 à denture extérieure, engrenant toutes deux avec des satellites 11 supportés, à intervalles angulaires égaux autour de l'axe 12 du dispositif de transmission, par des tourillons excentrés 14 d'un porte-satellites 13 relié rigidement à l'arbre de sortie 2b. La roue planétaire 9 peut tourner librement autour de l'axe 12 du dispositif de transmission par rapport à l'arbre de sortie 2b qu'elle entoure. Toutefois, un dispositif de roue libre 16 empêche la roue planétaire 9 de tourner en inverse, c'est à dire en sens inverse du sens normal de rotation de l'arbre d'entrée 2a, par rapport au carter 4 de la transmission.

La couronne 8 est liée en rotation, mais libre en coulissement axial, relativement à l'arbre d'entrée 2a, par l'intermédiaire de cannelures 17.

Un embrayage multidisques 18 accouple sélectivement la couronne 8 avec le porte-satellites 13.

L'empilement de disques 19 et 22 de l'embrayage 18 peut être serré axialement entre un plateau de retenue 26 solidaire du porte-satellites 13 et un plateau mobile 27 qui appartient à une cage 20, liée en rotation avec le porte-satellites 13, mais pouvant coulisser par rapport à celui-ci.

La cage 20 supporte des masselottes centrifuges 29 disposées en couronne autour de l'embrayage 18. Les masselottes sont donc liées en rotation à l'arbre de sortie 2b du dispositif de transmission.

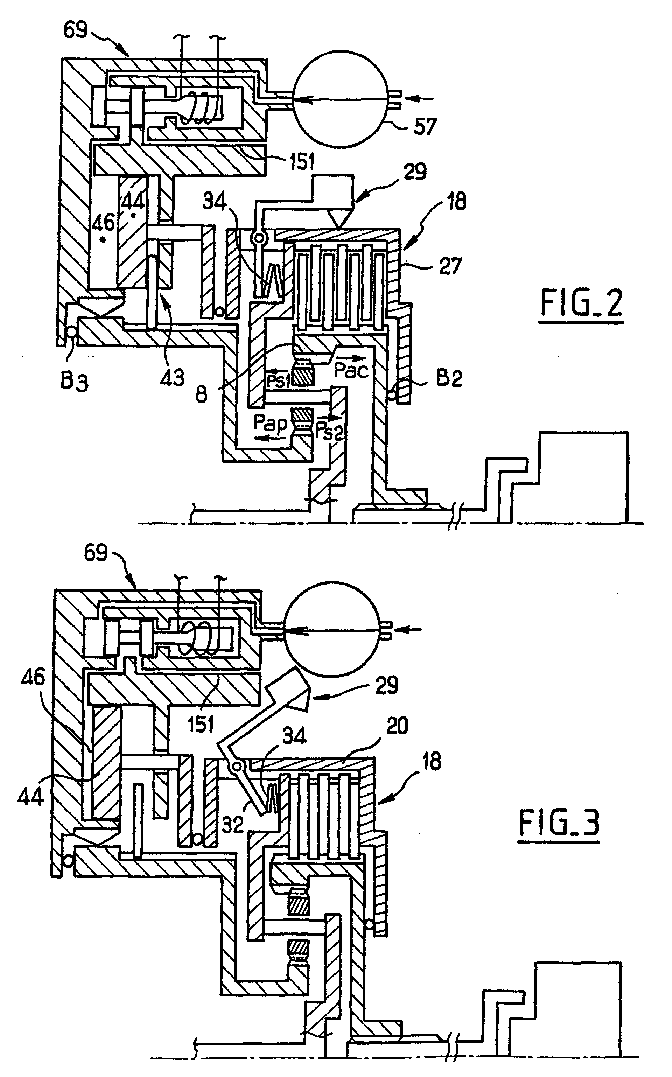

La rotation du porte-satellites 13 tend à faire pivoter radialement vers l'extérieur un corps 31 de chaque masselotte 29 autour de son axe de pivotement tangentiel 28 sous l'action de la force centrifuge, pour faire passer les masselottes d'une position de repos définie par appui d'une butée 36 des masselottes contre la cage 20 (figures 1 et 2) à une position écartée visible à la figure 3.

Il en résulte alors un déplacement axial relatif entre un bec 32 de chaque masselotte et l'axe de pivotement 28 de la masselotte. Ce déplacement, qui rapproche le bec 32 du plateau mobile 27, peut correspondre à une compression d'un ressort belleville 34 monté entre le bec 32 et le plateau de retenue 26 et/ou à un déplacement du plateau mobile 27 vers le plateau fixe 26 dans le sens du serrage de l'embrayage 18.

Lorsque le dispositif de transmission est au repos comme représenté à la figure 1, le ressort belleville 34 transmet à la cage 20, par l'intermédiaire des masselottes 29 en butée au repos, une force qui serre l'embrayage 18 de sorte que l'entrée 2a du dispositif de transmission est couplée en rotation avec la sortie 2b et le dispositif de transmission constitue une prise directe capable de transmettre du couple jusqu'à un certain maximum défini par la force de serrage du ressort belleville.

D'autre part, les dentures de la couronne 8, des satellites 11 et de la roue planétaire 9 sont de type hélicoïdal. Ainsi, dans chaque couple de dentures engrenant sous charge, il apparaît des poussées axiales opposées proportionnelles à la force circonférentielle transmise, donc au couple sur l'arbre d'entrée 2a et au couple sur l'arbre de sortie 2b. Le sens d'inclinaison hélicoïdale des dentures est choisi pour que la poussée axiale Pac (figure 2) prenant naissance dans la couronne 8 lorsqu'elle transmet un couple moteur s'exerce dans le sens où la couronne 8 pousse le plateau mobile 27, par l'intermédiaire d'une butée B2, dans le sens écartant les plateaux 26 et 27, donc desserrant l'embrayage 18. La force Pac tend aussi à rapprocher l'un de l'autre le bec 32 des masselottes 29 et le plateau de retenue 26, donc à maintenir les masselottes 29 dans leur position de repos et à comprimer le ressort belleville 34. Les satellites 11, qui engrènent non seulement avec la couronne 8 mais aussi avec la roue planétaire 9, subissent deux réactions axiales opposées PS1 et PS2, qui s'équilibrent, et la roue planétaire 9 subit, compte-tenu de son engrènement avec les satellites 11, une poussée axiale Pap qui est égale en intensité et opposée à la poussée axiale Pac de la couronne 8. La poussée Pap de la roue planétaire 9 est transmise au carter 4 par l'intermédiaire d'une butée B3.

C'est la situation représentée à la figure 2. En supposant cette situation réalisée, on va maintenant décrire le fonctionnement de base du dispositif de transmission. Tant que le couple transmis par l'arbre d'entrée 2a est tel que la poussée axiale Pac dans la couronne 8 suffit pour comprimer le ressort belleville 34 et maintenir les masselottes 29 dans la position de repos représentée à la figure 2, l'écartement entre le plateau de retenue 26 et le plateau mobile 27 de l'embrayage est tel que les disques 19 et 22 glissent les uns contre les autres sans transmettre de couple entre eux. Dans ce cas, le porte-satellites 13 peut tourner à une vitesse différente de celle de l'arbre d'entrée 2a, et il tend à être immobilisé par la charge que l'arbre de sortie 2b doit entraîner. Il en résulte que les satellites 11 tendent à se comporter en inverseurs de mouvement, c'est à dire à faire tourner la roue planétaire 9 en sens inverse du sens de rotation de la couronne 8. Mais ceci est empêché par la roue libre 16. La roue planétaire 9 est donc immobilisée par la roue libre 16 et le porte-satellites 13 tourne à une vitesse qui est intermédiaire entre la vitesse nulle de la roue planétaire 9 et la vitesse de la couronne 8 et de l'arbre d'entrée 2a. Le module fonctionne donc en réducteur. Si la vitesse de rotation augmente et que le couple reste inchangé, il arrive un instant où la force centrifuge des masselottes 29 produit sur le plateau mobile 27 par rapport au plateau de retenue 26 une force axiale de serrage plus grande que la poussée axiale Pac, et le plateau mobile 27 est poussé vers le plateau 26 pour réaliser la prise directe (figure 3).

L'embrayage 18, à mesure qu'il se serre pendant le passage en prise directe, transmet de plus en plus de puissance directement de la couronne 8 liée à l'arbre d'entrée 2a, au porte-satellites 13 lié à l'arbre de sortie 2b. Par conséquent, les dentures du train épicycloïdal 7 travaillent de moins en moins, c'est à dire qu'elles transmettent de moins en moins de force. La poussée axiale Pac décroît et finit par s'annuler. Ainsi, la poussée axiale due à la force centrifuge peut s'exercer pleinement pour serrer les plateaux 26 et 27 l'un vers l'autre.

Il peut alors arriver que la vitesse de rotation de l'arbre de sortie 2b diminue, et/ou que le couple à transmettre augmente, au point que les masselottes 29 n'assurent plus dans l'embrayage 18 une force de serrage suffisante pour transmettre le couple. Dans ce cas, l'embrayage 18 commence à patiner. La vitesse de la roue planétaire 9 diminue jusqu'à s'annuler. La roue libre 16 immobilise la roue planétaire et la force de denture Pac réapparaît pour desserrer l'embrayage, de sorte que le dispositif de transmission fonctionne ensuite en réducteur. Ainsi, chaque fois qu'il s'opère un changement du fonctionnement en réducteur au fonctionnement en prise directe, ou inversement, la force axiale Pac varie dans le sens qui stabilise le rapport de transmission nouvellement institué. Ceci est très avantageux d'une part pour éviter les changements de rapport trop fréquents autour de certains points de fonctionnement critiques, et d'autre part pour que les situations de patinage de l'embrayage 18 ne soient que transitoires.

Comme le montre la figure 1, des moyens complémentaires sont prévus pour faire sélectivement fonctionner le dispositif de transmission en réducteur dans des conditions différentes de celles déterminées par les forces axiales du ressort belleville 34, des masselottes centrifuges 29 et de denture de la couronne 8.

Pour cela, le dispositif de transmission comprend un frein 43 qui permet d'immobiliser la roue planétaire 9 relativement au carter 4 indépendamment de la roue libre 16. En d'autres termes, le frein 43 est monté fonctionnellement en parallèle avec la roue libre 16 entre la roue planétaire 9 et le carter 4. Le piston 44 d'un actionneur hydraulique 45 est monté axialement coulissant pour sélectivement serrer et desserrer le frein 43. Le frein 43 et le piston 44 ont une forme annulaire ayant pour axe l'axe 12 du dispositif de la transmission. Le piston 44 est adjacent à une chambre hydraulique 46 qui peut être sélectivement alimentée en huile sous pression pour solliciter le piston 44 dans le sens du serrage du frein 43.

De plus, le piston 44 est relié rigidement à un poussoir 47 qui peut s'appuyer contre la cage 20 au moyen d'une butée axiale B₄. Le montage est tel que lorsque la pression régnant dans la chambre 46 pousse le piston 44 dans la position de serrage du frein 43, la cage 20, avant que le frein 43 ne soit serré, est repoussée de manière suffisante pour que l'embrayage 18 soit relâché.

Ainsi, lorsque le piston 44 est dans la position de serrage du frein (figure 2), la roue planétaire 9 est immobilisée même si le porte-satellites 13 tend à tourner plus vite que la couronne 8, comme c'est le cas lors du fonctionnement en retenue, et par conséquent le module fonctionne en réducteur, comme le permet le desserrage de l'embrayage 18.

L'ensemble 43, 44, 46, 47 qui vient d'être décrit constitue donc un moyen actionneur qui peut être mis à la disposition du conducteur du véhicule pour obliger le module à passer au fonctionnement en réducteur ou à conserver le fonctionnement en réducteur lorsque le conducteur souhaite augmenter l'effet de frein moteur, par exemple en descente, ou lorsqu'il souhaite augmenter le couple moteur sur l'arbre de sortie 2b. Lorsque le couple est moteur, le frein 43 s'il est serré, exerce une action redondante avec celle de la roue libre 16, mais cela n'est pas gênant.

L'alimentation et la purge de la chambre 46 sont déterminées par l'état d'une électrovanne 69. Lorsqu'elle est au repos, l'électrovanne 69 (figures 1 et 3) relie la chambre 46 avec un trajet de fuite 151 qui est hydrauliquement résistant. Lorsque l'électrovanne 69 est alimentée électriquement (figure 2), elle isole la chambre 46 du trajet de fuite 151 et la relie avec la sortie d'une pompe 57 entraînée par le moteur 5. Indépendamment de l'état de l'électrovanne 69, la pompe 57 peut également servir à alimenter un circuit de lubrification (non représenté) du dispositif de transmission.

L'électrovanne 69 est pilotée par des moyens de commande 452 comprenant une unité de pilotage 152 reliée à un détecteur 153 de la vitesse Vs de l'arbre de sortie 2b, un détecteur 158 de la vitesse V_{E} de l'arbre d'entrée 2a, un sélecteur "manuel/automatique" 154 mis à la disposition du conducteur, un détecteur de la position de la pédale d'accélérateur 156, et un sélecteur "normal/sport" 157 permettant au conducteur de choisir entre deux comportements automatiques différents du dispositif de transmission.

L'unité de pilotage 152 surveille le rapport entre la vitesse d'entrée V_{E} et la vitesse de sortie V_{S}. Tant que le dispositif fonctionne en réducteur (situation représentée à la figure 2), ce rapport est égal à environ 1,4. Si la vitesse d'entrée V_{E} diminue par rapport à la vitesse de sortie V_{S}, c'est que les masselottes 29 ont commencé à serrer l'embrayage 18 et que par conséquent le dispositif de transmission a initié spontanément un passage au fonctionnement en prise directe. Dans ce cas, pour assurer la progressivité de ce processus et, plus précisément, assurer une certaine durée de patinage des disques 19 et 22 de l'embrayage, les moyens de commande 452 qui ont détecté la diminution de V_{E} par rapport à V_{S}, commandent l'alimentation de la chambre 46 de façon que le piston 44 pousse la cage 20 dans le sens tendant à desserrer l'embrayage 18, pour ralentir le processus de serrage aboutissant à la situation représentée à la figure 3. En pratique, on souhaite que les moyens de commande 452 fassent commencer dès que possible l'action du piston 44. Compte-tenu du délai de détection et d'inévitables temps de réponse, l'action commence lorsque le rapport V_{E} /V_{S} devient inférieur à environ 1,3.

Dans l'exemple représenté, les moyens de commande 452 comprennent en plus de l'unité de pilotage 152 un étage de progressivité 453 qui reçoit également les signaux V_{E} et V_{S}, calcule en permanence le rapport de transmission, détecte la variation du rapport V_{E} /V_{S} résultant du début du serrage de l'embrayage 18 et produit sélectivement sur sa sortie 454 un signal de commande produisant une excitation modulée de l'électrovanne 69 de façon que l'actionneur 45 soit alimenté comme il vient d'être dit.

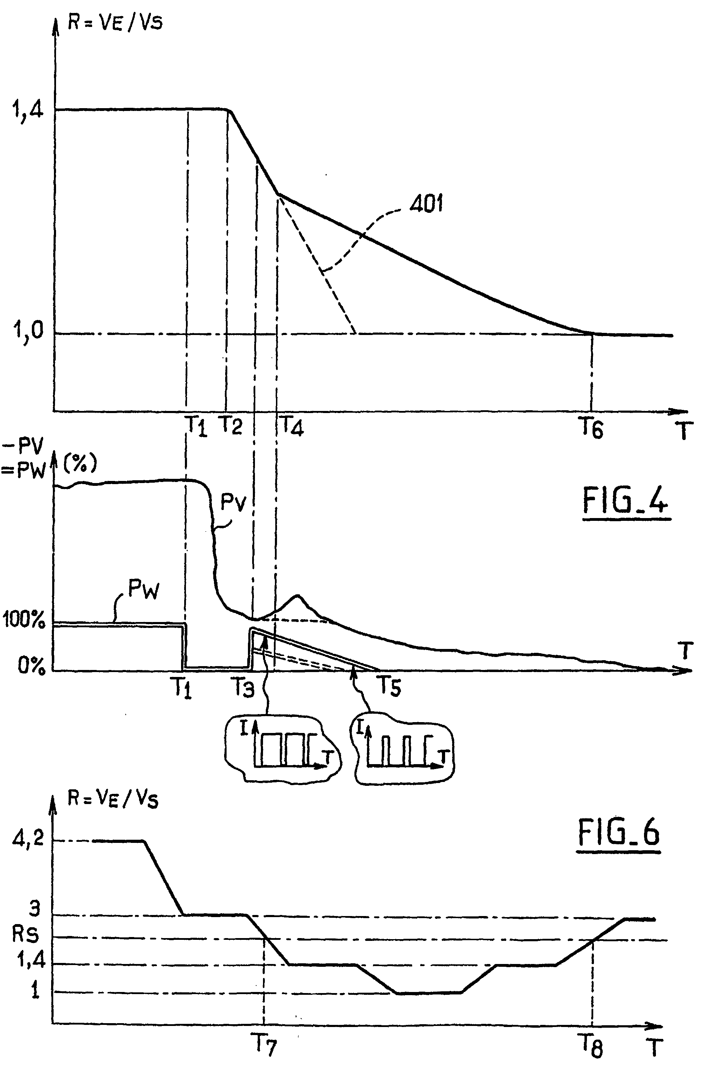

On va décrire plus précisément le procédé selon l'invention en référence à la figure 4.

Dans cette figure, le graphique du haut indique l'évolution du rapport de transmission R = V_{E}/V_{S} (en ordonnées) relativement au temps T (en abscisse). Le graphique du bas indique le long de la même échelle de temps T, le niveau d'excitation (double trait sur le dessin) du bobinage de l'électrovanne 69, et le niveau de pression PV (simple trait) dans la chambre 46.

Selon une particularité préférentielle mise en oeuvre dans cet exemple, l'intensité de l'effet de contre-balancement assuré par l'actionneur 45 est pilotée par l'unité de progressivité 453 en faisant varier la largeur PW d'impulsions électriques appliquées à l'électrovanne 69. Pour cela, le signal sur la sortie 454 est appliquée à un générateur d'impulsions 456 dont la sortie 457 délivre les impulsions à l'électrovanne 69. La largeur PW des impulsions varie de 0 % (absence totale d'impulsions) à 100 % correspondant à un niveau continu. Le graphique du bas de la figure 4 représente l'évolution de la largeur des impulsions dans le temps, exprimée en %. De petites vues de détail visualisent qu'un pourcentage élevé correspond à une grande largeur d'impulsions et un pourcentage faible à une petite largeur d'impulsions.

La fréquence d'impulsions est constante et peut par exemple être de 50 Hz. Le niveau des impulsions en dehors des périodes de coupure est également constant, par exemple 12 volts.

Dans l'exemple représenté, le rapport de transmission est initialement égal à 1,4. Jusqu'à un instant T₁, le fonctionnement en réducteur est imposé par l'actionneur 45 car la largeur d'impulsions appliquée à l'électrovanne 69 est de 100 %. Il s'agit dans ce cas d'un signal continu appliqué par l'unité de pilotage 152. L'actionneur 45 est dimensionné pour être capable de surmonter la force centrifuge produite par les masselottes 29 même en l'absence de force de réaction de denture P_{AC} pour toutes les vitesses où cela peut être utile en pratique. Par exemple, si l'on estime que la vitesse V_{S} maximum pour laquelle il peut dans certains cas être nécessaire d'imposer le fonctionnement en réducteur est de 3 000 tours/minute, la force de l'actionneur 45 lorsque la largeur d'impulsions est durablement de 100 % est au moins égale à la force produite par effet centrifuge sur les becs 32 des masselottes lorsque la cage 20 tourne à 3 000 tours/minute.

Le fonctionnement en réducteur continue un certain temps jusqu'à l'instant T₂ où le rapport de transmission se met brusquement à diminuer. La durée T₁-T₂ peut être très courte si dès la fin de l'alimentation de l'actionneur 45 la force axiale produite par les masselottes 29 est supérieure à la réaction P_{AC}. La durée T₁-T₂ peut être plus longue dans le cas contraire, et s'il faut par conséquent attendre que le déséquilibre entre la force produite par les masselottes 29 et la force de réaction de denture P_{AC} commence à changer de sens. Quoi qu'il en soit, l'unité de progressivité 453, qui calcule en permanence le rapport R = V_{E}/V_{S}, détecte peu après l'instant T₂ qu'un passage du fonctionnement en réducteur au fonctionnement en prise directe s'est initié. L'unité 453 provoque ainsi à partir de l'instant T₃ et jusqu'à l'instant T₅ une excitation prédéterminée de l'actionneur 45 pour ralentir le processus de passage en prise directe, en contre-balançant de manière dosée la force produite par les masselottes 29.

Etant donné que l'actionneur 45 est capable de maintenir l'embrayage 18 ouvert à l'encontre de l'effet des masselottes 29 même en l'absence de réaction de denture P_{AC}, une excitation durable de l'actionneur 45 à PW = 100 % aurait pour effet non pas de ralentir le passage en prise directe, mais dans la plupart des cas de l'empêcher totalement et de provoquer un retour au fonctionnement en réducteur.

Dans l'exemple représenté, le dosage de l'effet de contre-balancement consiste à appliquer à l'électrovanne 69, comme représenté en bas de la figure 4, une largeur d'impulsions qui varie de 100 % à 0 % linéairement entre l'instant T₃ et l'instant T₅. L'intervalle de temps T₃-T₅ est en rapport avec la durée souhaitée pour une bonne progressivité du changement de rapport.

Plus particulièrement, l'effet des impulsions est de produire une remontée de la pression PV dans la chambre 46 de l'actionneur 45 jusqu'à un niveau qui est toutefois nettement inférieur à celui produit par une largeur d'impulsions durablement fixée à 100 % (voir graphe du bas de la figure 4). Sous l'effet des impulsions, l'électrovanne 69 oscille entre l'état ouvert et l'état fermé. Lorsqu'elle fait communiquer la chambre 46 avec la pompe 57, une onde de pression est envoyée dans la chambre 46. Lorsque l'électrovanne 69 fait communiquer la chambre 46 avec le trajet de purge 151, le caractère hydrauliquement résistant de ce trajet empêche une décharge immédiate de la chambre 46. Il en résulte sur le piston 44 un effort de contre-balancement qui est modulé sensiblement suivant le profil des largeurs d'impulsions PW dans le temps T, mais avec un certain retard. Par conséquent, la force résultante appliquée à l'embrayage dans le sens de la fermeture croît d'une valeur très faible à l'instant T₂ à une valeur égale à la force produite par les masselottes lorsque, un certain temps après la fin des impulsions à l'instant T5, la pression dans la chambre 46 s'est annulée. Ainsi, le rapport de transmission, au lieu de chuter brutalement selon la ligne en pointillés 401 illustrée à la figure 4, décroît progressivement de l'instant T₄ (légèrement postérieur à l'instant T₃), à l'instant T₆, postérieur à l'instant T₅ de fin des impulsions. Le profil de décroissance du rapport peut beaucoup varier d'un cas à l'autre, selon par exemple que le changement de rapport est dû à une augmentation, nécessairement progressive de la vitesse de rotation V_{S}, ou à une disparition, qui peut être brutale, du couple à transmettre. Typiquement, comme illustré à la figure 4, le profil de décroissance ressemble au profil de décroissance de la largeur d'impulsions PW.

On peut également assurer une progressivité améliorée lorsque les moyens de commande 452, en fonction des signaux qu'ils reçoivent sur leurs entrées, doivent commander le passage du fonctionnement en prise directe au fonctionnement en réducteur, au moyen de l'actionneur 45.

Pour cela, au lieu de faire passer brusquement de 0 % à 100 % la largeur d'impulsions PW appliquée à l'électrovanne 69, l'électrovanne peut être soumise à une croissance progressive de la largeur PW des impulsions qui lui sont appliquées. Il peut cependant être avantageux de commencer par quelques impulsions de grande largeur pour remplir rapidement la chambre 46 et rattraper rapidement les différents jeux et déformabilités du système. Après cela les impulsions retombent à une largeur plus réduite puis croissent à nouveau jusqu'à un niveau durable de 100 %.

Enfin, selon une variante représentée en pointillée au graphe du bas de la figure 4, il est possible que le train d'impulsions appliqué à l'électrovanne 69 pour ralentir le passage en prise directe parte d'une valeur de PW inférieure à 100 %, l'influence sur la pression dans la chambre 46 étant diminuée de façon correspondante.

Dans l'exemple de réalisation représenté schématiquement à la figure 5, le dispositif de transmission comprend deux trains planétaires montés en série, 107, 207. Le train planétaire 107 est semblable à celui décrit en référence aux figures 1 à 3 : sa couronne 108 est reliée à l'arbre d'entrée 2a, sa roue planétaire 109 est reliée au carter 104 par l'intermédiaire d'une roue libre 116, et son porte-satellites 114, supportant des satellites 111 engrenant avec la couronne 108 et la roue planétaire 109, est relié à l'arbre de sortie 2ab du mécanisme 107, qui est également l'arbre d'entrée du mécanisme 207. Un embrayage 118 permet d'accoupler sélectivement la couronne 108 avec le porte-satellites 114, autrement dit l'arbre d'entrée 2a avec l'arbre intermédiaire 2ab pour réaliser une prise directe dans le train planétaire 107. Lorsque l'embrayage 118 est desserré, le train planétaire 107 fonctionne en réducteur, la roue planétaire 109 étant alors immobilisée par la roue libre 116. Le rapport de réduction fourni par un tel train planétaire, c'est-à-dire un train planétaire avec entrée sur la couronne et sortie sur le porte-satellites, est couramment de l'ordre de 1,4.

Le second train planétaire 207 est différent en ce que son arbre d'entrée, constitué par l'arbre intermédiaire 2ab, est raccordé non pas à la couronne 208, mais à la roue planétaire 209, la couronne 208 étant reliée au carter 104 par l'intermédiaire d'une roue libre 216 empêchant la couronne 208 de tourner en inverse. L'arbre de sortie 2b est relié au porte-satellites 214 supportant des satellites 211 engrenant chacun avec la couronne 208 et la roue planétaire 209. Un embrayage 218 permet de solidariser l'arbre intermédiaire 2ab avec l'arbre de sortie 2b pour réaliser une prise directe dans le second mécanisme différentiel 207.

Lorsque l'embrayage 218 est desserré, le mécanisme 207 fonctionne en réducteur avec la couronne 208 immobilisée par la roue libre 216. Compte tenu du fait que l'entrée s'effectue sur la roue planétaire 209 et la sortie sur le porte-satellites 214, le rapport de réduction est alors typiquement égal à 3.

Les embrayages 118 et 218 sont sélectivement serrés par un ressort R1 et respectivement par des masselottes 229 entraînées en rotation par le porte-satellites 213, et desserrés à l'encontre de l'action du ressort R1 et respectivement des masselottes 229, par des actionneurs A1 et respectivement A2, commandés chacun par une électrovanne V1, respectivement V2, elles-mêmes pilotées par l'unité de commande 452. En outre, dans le cas de l'embrayage 218, une butée B2 transmet la force axiale de denture P_{AC} de la couronne 208 à la cage 220 dans le sens du desserrage de l'embrayage 218.

L'unité 452 reçoit sur ses entrées les signaux V_{E} et V_{S} fournis par les détecteurs 158 et 153 respectivement ainsi que le signal du détecteur 156 indicateur de la position de la pédale d'accélérateur du véhicule, ce qui correspond à un paramètre de charge C du moteur du véhicule, pouvant s'exprimer par exemple en pour-cent de la charge maximale.

Le dispositif de transmission qui vient d'être décrit est capable de fournir quatre rapports différents. Le premier rapport, ou rapport le plus court, est établi lorsque les deux embrayages 118, 218 sont desserrés et que par conséquent les deux trains planétaires 107, 207 fonctionnent en réducteurs. La transmission fournit alors un rapport de réduction égal à 1,4 X 3 = 4,2.

Pour le fonctionnement selon le deuxième rapport, l'embrayage 118 est serré et l'embrayage 218 desserré, de sorte que le train planétaire 107 fonctionne en prise directe et le train planétaire 207 en réducteur, ce qui donne un rapport de réduction total de 3 dans le dispositif de transmission.

Pour le fonctionnement selon le troisième rapport, c'est l'inverse, l'embrayage 118 est desserré et l'embrayage 218 serré, de sorte que seul le premier train planétaire 107 fonctionne en réducteur. Ceci fournit un rapport de réduction global d'environ 1,4.

Pour le fonctionnement selon le quatrième rapport, ou rapport le plus long, les deux trains 107, 207 fonctionnent en prise directe, le rapport global étant égal à 1.

Dans l'exemple simple qui est illustré, les changements de rapport dans le premier train sont uniquement pilotés par l'unité 452 d'après les paramètres de fonctionnement V_{S} (vitesse de sortie) et C (charge) mais des versions plus sophistiquées sont concevables, le premier train étant alors par exemple semblable à celui des figures 1 à 3.

Dans ce dispositif de transmission, le passage du deuxième au troisième rapport est délicat à piloter car l'embrayage 118 doit se desserrer au moment où l'embrayage 218 doit se serrer. Si la synchronisation entre ces deux opérations est imparfaite, on risque d'avoir, pendant de courts instants, ou bien un desserrage simultané des deux embrayages, c'est à dire un bref retour au premier rapport de transmission avec vraisemblablement un risque de survitesse du moteur, ou bien un serrage simultané des deux embrayages, c'est à dire une brève situation de prise directe dans l'ensemble de la transmission avec un risque de sous-vitesse du moteur. Dans les deux cas, les passagers subissent des chocs, et la mécanique subit des chocs et des contraintes inutiles. En. outre, ces irrégularités de fonctionnement, si on les laissait se produire, réagiraient sur les paramètres de fonctionnement relevés par l'unité 452, ce qui perturberait encore davantage le processus de changement de rapport.

On voit d'après la figure 6 que la détection par l'unité 452 du rapport global du dispositif de transmission R = V_{E}/V_{S} permet à l'unité de pilotage de savoir quel rapport de transmission est réalisé à chaque instant et, par conséquent, en cas de variation de ce rapport, quel changement de rapport est en train de s'opérer.

Par conséquent, lorsque à partir du deuxième rapport de transmission, correspondant à R = 3, les masselottes 229 du deuxième train épicycloïdal 207 commencent à serrer l'embrayage 218, l'unité 452 détecte qu'il s'agit d'un passage du deuxième au troisième rapport, passage pour lequel il y aura lieu de synchroniser l'action des deux embrayages.

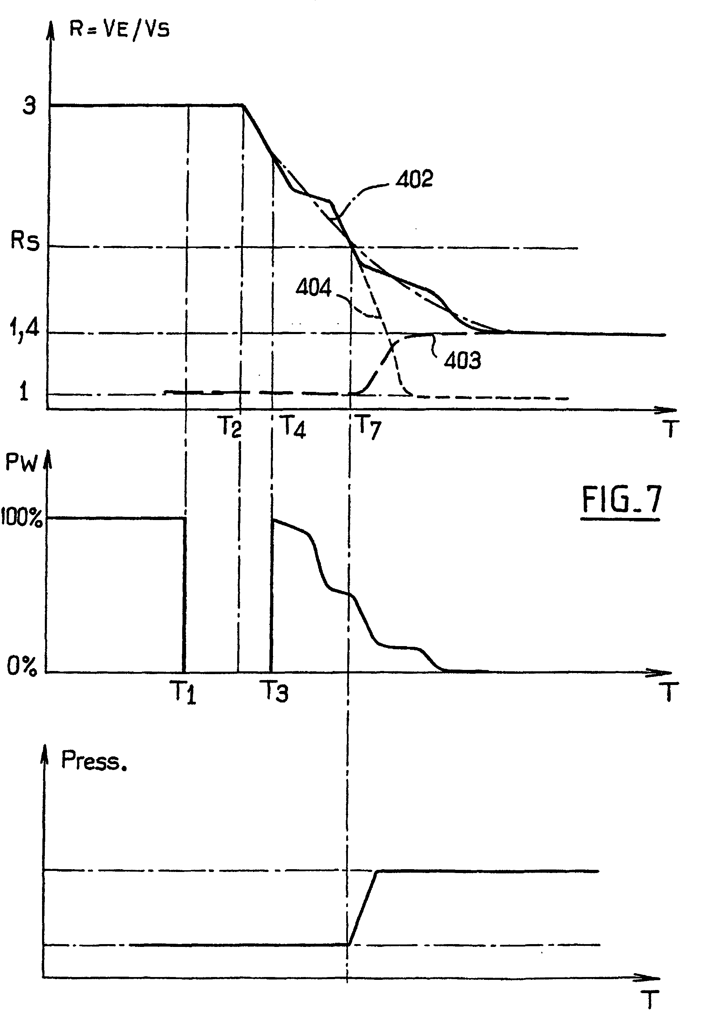

La figure 7 illustre le procédé qui est mis en oeuvre pour éviter les inconvénients décrits plus haut, et plus généralement réaliser une transition quasi parfaite entre le deuxième et le troisième rapport de transmission.

On retrouve dans l'exemple de la figure 7 l'instant T1 à partir duquel l'unité de pilotage 452, autorise la fermeture du deuxième embrayage 218, l'instant T2 à partir duquel cette fermeture commence à se produire, et l'instant T3 à partir duquel l'unité de commande 452, intégrant dans cet exemple l'unité de progressivité, excite l'actionneur 245 de manière dosée pour éviter une fermeture trop rapide de cet embrayage. Le train d'impulsions est également appliqué à l'actionneur 145 ce qui, de manière avantageuse, initie le desserrage de l'embrayage 118.

Dans cet exemple, plus perfectionné que celui de la figure 4, l'unité de pilotage 152 calcule en permanence le rapport R et adapte l'excitation (largeur d'impulsions) de l'actionneur 245 pour que R varie suivant une loi déterminée dans le temps, qui a été préalablement chargée dans une mémoire de l'unité 452. A la figure 7, cette loi prédéterminée est illustrée par une courbe en trait mixte 402. Plusieurs types d'asservissement sont possibles. On peut par exemple à chaque instant calculer l'erreur entre la valeur de R et une valeur de consigne pour cet instant. On peut également à chaque instant calculer la dérivée de R par rapport au temps et corriger l'excitation de l'actionneur 245 pour tenter de ramener cette dérivée à une valeur de consigne prédéterminée.

A un instant T7, l'unité 452 détecte que R a franchi un seuil R_{S}, par exemple R_{S} = 2. A cet instant, l'unité 452 commande l'excitation continue à PW = 100% de l'actionneur 145 pour desserrer l'embrayage 118 du premier train 107. La pression hydraulique dans l'actionneur 145 est illustrée par le diagramme du bas de la figure 7. En conséquence, le train 107 passe progressivement du fonctionnement en prise directe au fonctionnement en réducteur, comme illustré par le diagramme 403 du haut de la figure 7, son rapport de transmission passant donc de 1,0 à 1,4. Même si l'entrée en action de l'actionneur 145 est relativement brusque, ceci ne produit aucun choc sur l'arbre d'entrée 2a ou l'arbre de sortie 2b car la régulation assurée au moyen de l'actionneur 245 porte sur le rapport global de la transmission. Par conséquent, comme illustré par la courbe 404 en haut de la figure 7, si l'entrée en action de l'actionneur 145 est brusque, la régulation opérée par l'actionneur 245 va provoquer une brusque décroissance correspondante du rapport de transmission dans le train 207, de façon que le rapport global continue de suivre d'assez près le profil idéal 402.

Revenant à la figure 6, lorsque l'unité 452 détecte un passage du premier au deuxième rapport ou du troisième au quatrième rapport, pour chacun desquels il y a fermeture de l'embrayage 118 sans modification de l'état de l'embrayage 218, l'actionneur 145 peut être piloté comme il a été décrit en référence aux figures 1 à 4 ou d'une manière plus sophistiquée pour que le rapport de transmission ou sa dérivée dans le temps suive une loi ou consigne prédéterminée. Les impulsions, également appliquées à l'embrayage 218, sont sans effet sur celui-ci car la pression qui en résulte dans l'actionneur 245 est insuffisante.

Dans la partie droite de la figure 6, on a également illustré les situations où le dispositif de transmission provoque un passage à un rapport plus court. Dans ce cas, les actionneurs peuvent être pilotés comme cela a été décrit dans le WO-97/08 478.

En ce qui concerne le passage du troisième au deuxième rapport (partie droite de la figure 6), celui-ci est initié spontanément par un patinage de l'embrayage 218 ou sur intervention de l'unité 452 provoquant ce patinage par une excitation appropriée de l'actionneur 245. A partir d'un instant T8 correspondant au franchissement d'un seuil qui peut être le seuil R_{S} comme illustré ou un seuil légèrement différent, l'unité 452 commande la purge de l'actionneur 145. Dans ce cas, le procédé selon l'invention peut également être mis en oeuvre, en maintenant, au moyen d'impulsions modulées en largeur, une résistance dosée dans l'actionneur 145 à l'encontre de l'action du ressort R1.

Bien entendu, l'invention n'est pas limitée aux exemples décrits et représentés.

La mise en oeuvre de l'invention n'est pas nécessairement couplée avec d'autres fonctions de pilotage d'une transmission.

L'invention est compatible avec des transmissions autres qu'actionnées par la force centrifuge et/ou les forces de réaction de denture.

Dans un mode de réalisation où il faut modifier simultanément l'état de deux embrayages tels que 118 et 218 à la figure 5, on pourrait n'appliquer l'invention qu'isolément à l'embrayage qui est soumis à l'action du générateur d'effort, par exemple comme décrit en référence aux figures 1 à 4, et réguler d'une autre manière la progressivité du changement d'état de l'autre embrayage, en utilisant notamment l'enseignement du WO-A-96/23 144 et du WO-A-97/08 478.

## Revendications

1. Procédé pour ajuster la progressivité de passage d'un rapport de transmission ancien à un rapport de transmission nouveau, dans un dispositif de transmission comprenant :
- un dispositif d'accouplement sélectif (18, 118, 218) entre deux organes rotatifs ;
- un moyen générateur d'effort essentiellement non-piloté (29, R1, 229) pour solliciter le moyen d'accouplement sélectif vers l'un prédéterminé de ses états de glissement et d'adhérence, correspondant au rapport nouveau ;
- un moyen actionneur (45, 145, 245) capable de solliciter le moyen d'accouplement sélectif vers
l'autre desdits états, correspondant au rapport ancien; caractérisé en que le procédé comprend, pendant que le moyen générateur actionne le moyen d'accouplement sélectif vers son état correspondant au rapport nouveau, une étape de commande du moyen actionneur pour qu'il produise une force résistante dosée, ralentissant la transition entre le rapport ancien et le rapport nouveau.

2. Procédé selon la revendication 1, **caractérisé en ce qu'**en ce qu'il est appliqué à un dispositif de transmission dont le moyen actionneur est un vérin hydraulique (45, 145, 245), et **en ce que** l'étape de commande est exécutée en raccordant sélectivement une chambre de pression (46) du vérin avec une source de pression (57).

3. Procédé selon la revendication 2, **caractérisé en ce qu'**on dose ladite force résistante en faisant alterner des phases où la chambre de pression (46) communique avec un circuit de purge (151) et des phases où la chambre de pression communique avec la source (57).

4. Procédé selon l'une des revendications 1 à 3, **caractérisé en ce qu'**on excite l'actionneur au moyen d'impulsions.

5. Procédé selon la revendication 4, **caractérisé en ce qu'**on dose l'effort en réglant la largeur des impulsions (PW).

6. Procédé selon l'une des revendications 1 à 5, **caractérisé en ce qu'**on applique au moyen actionneur (45, 145, 245) une excitation qui décroît à partir d'un maximum et selon un profil de décroissance prédéterminé.

7. Procédé selon la revendication 6, **caractérisé en ce qu'**on détecte une grandeur physique (V_{E}, V_{S}) sur laquelle influe le passage progressif du rapport de transmission ancien au rapport de transmission nouveau, et on commande le moyen actionneur (45, 245) en fonction du résultat de cette détection.

8. Procédé selon la revendication 7, **caractérisé en ce qu'**on détecte comme grandeur physique au moins une vitesse de rotation (V_{E}) et on la compare à une autre vitesse de rotation (V_{S}) par rapport à laquelle elle varie pendant le processus de changement de rapport.

9. Procédé selon la revendication 7 ou 8, **caractérisé en ce qu'**on dose la force résistante en fonction de l'écart entre une valeur réelle obtenue par la détection de la grandeur physique et une consigne pendant le processus de changement de rapport.

10. Procédé selon l'une des revendications 7 à 9, **caractérisé en ce qu'**en fonction de la grandeur physique détectée, on pilote en outre un autre changement d'état dans le dispositif de transmission.

11. Procédé selon la revendication 10, **caractérisé en ce que** le pilotage de l'autre changement d'état comprend l'initiation dudit autre changement d'état lorsque la grandeur physique a franchi un seuil prédéterminé (R_{S}).

12. Procédé selon la revendication 10 ou 11, **caractérisé en ce qu'**on détermine si ledit autre changement d'état est nécessaire d'après la gamme de valeurs dans laquelle évolue la grandeur physique (R) pendant le changement de rapport.

13. Procédé selon l'une des revendications 7 à 12, **caractérisé en ce que** comme grandeur physique on détecte une vitesse d'entrée (V_{E}) dans le dispositif de transmission par rapport à une vitesse de sortie (V_{S}) du dispositif de transmission.

14. Procédé selon l'une des revendications 1 à 13, **caractérisé en ce que** pendant le processus de changement de rapport on laisse le moyen générateur d'effort (29, 229) sans pilotage direct.

15. Procédé selon l'une des revendications 1 à 14, **caractérisé en ce qu'**il est appliqué à un dispositif de transmission dans lequel le moyen générateur d'effort est de type centrifuge (29, 229).

16. Procédé selon l'une des revendications 1 à 15, **caractérisé en ce que** le moyen actionneur (45, 245) agit dans le même sens sur le dispositif d'accouplement sélectif qu'une force (P_{AC}) produite proportionnellement à un couple transmis dans le dispositif de transmission.

17. Dispositif de transmission pour véhicule, comprenant:
- au moins un train d'engrenages (7 ; 107, 207) ;
- un moyen d'accouplement sélectif (18, 118, 218) pouvant par passage d'un état d'accouplement ancien à un état d'accouplement nouveau faire passer le train d'engrenage d'un rapport de transmission ancien à un rapport de transmission nouveau ;
- un moyen générateur d'effort essentiellement non piloté (29, R1, 229), capable de faire passer le moyen d'accouplement sélectif de l'état d'accouplement ancien a l'état d'accouplement nouveau ;
- un moyen actionneur (45, 145, 245) capable d'exercer sur la moyen d'accouplement sélectif une action vers l'état d'accouplement ancien ;
- des moyens de commande (452) du moyen actionneur ;
**caractérisé en ce que** les moyens de commande (452) comprennent des moyens de progressivité (453) pour faire exercer par le moyen actionneur un effort dosé ralentissant le passage du moyen d'accouplement sélectif de l'état d'accouplement ancien à l'état d'accouplement nouveau sous l'action du moyen générateur d'effort.

18. Dispositif de transmission selon la revendication 17, **caractérisé en ce que** le moyen actionneur est un vérin hydraulique (45, 145, 245), et les moyens de progressivité (453) sont conçus pour faire alterner des phases de purge et des phases de mise sous pression d'une chambre de travail (46) du vérin.

19. Dispositif de transmission selon la revendication 18, **caractérisé en ce que** le trajet de purge (151) du vérin est hydrauliquement résistant.

20. Dispositif de transmission selon l'une des revendications 17 à 19, **caractérisé en ce que** les moyens de progressivité (453) sont conçus pour générer des impulsions appliquées au moins indirectement au moyen actionneur (45, 145, 245).

21. Dispositif de transmission selon la revendication 20, **caractérisé en ce que** les impulsions sont à largeur d'impulsions variable.

22. Dispositif de transmission selon la revendication 20 ou 21, **caractérisé en ce que** les moyens de progressivité (453) sont capables d'appliquer sélectivement de manière continue des impulsions d'une largeur constante inférieure à 100 % pour faire produire par l'actionneur une force qui décale des conditions de changement spontané du rapport de transmission dans le dispositif de transmission.

23. Dispositif de transmission selon l'une des revendications 17 à 22, **caractérisé en ce que** les moyens de commande (452) ont une entrée reliée à des moyens (153, 158) pour détecter une grandeur physique susceptible d'être influencée par le changement progressif du rapport de transmission après son initiation.

24. Dispositif de transmission selon la revendication 23, **caractérisé en ce que** les moyens de commande (452) sont sensibles à l'évolution de la valeur de ladite grandeur physique pour doser l'action du moyen actionneur pendant le passage du rapport ancien au rapport nouveau.

25. Dispositif de transmission selon l'une des revendications 23 ou 24, **caractérisé en ce que** la grandeur physique à laquelle les moyens de commande sont sensibles comprend une vitesse à l'entrée du dispositif (V_{E}) par rapport à une vitesse à la sortie du dispositif (V_{S}).

26. Dispositif de transmission selon l'une des revendications 23 à 25, **caractérisé en ce que** les moyens de commande (452) réalisent un asservissement de la variation de la grandeur physique par rapport à une consigne.

27. Dispositif de transmission selon l'une des revendications 23 à 25, **caractérisé en ce que** les moyens de commande sont sensibles à l'évolution de la grandeur physique pour déclencher une excitation programmée, au moins indirecte, du moyen actionneur.

28. Dispositif de transmission selon l'une des revendications 23 à 27, **caractérisé en ce que** les moyens de commande sont en outre sensibles à une valeur de seuil (R_{S}) de la grandeur physique pour déclencher un autre changement d'état dans le dispositif de transmission.

29. Dispositif de transmission selon la revendication 28, **caractérisé en ce qu'**il comprend deux trains d'engrenage (107, 207) montés en série, **en ce que** le dispositif d'accouplement (218) est associé à un premier (207) des trains d'engrenage dans lequel le saut entre le rapport ancien et le rapport nouveau est relativement grand, et **en ce que** ledit autre changement d'état concerne l'autre train d'engrenage (107) pour le faire changer de rapport dans l'autre sens avec un saut plus petit.

30. Dispositif de transmission selon l'une des revendications 17 à 29, **caractérisé en ce que** le moyen générateur d'effort est un moyen centrifuge (229).

31. Dispositif de transmission selon l'une des revendications 17 à 30, **caractérisé en ce que** le moyen actionneur (45, 245) est monté de façon à ajouter son action sur le moyen d'accouplement sélectif (18, 218) dans le même sens qu'un moyen d'auto-pilotage (132) produisant une force (P_{AC}) représentative d'un couple transmis dans le dispositif de transmission.

32. Dispositif de transmission selon la revendication 31, **caractérisé en ce que** le moyen d'auto-pilotage est un moyen (132) pour transmettre au moyen d'accouplement sélectif (18, 218) une force (P_{AC}) de réaction de denture dans le train d'engrenage (7, 207).

33. Dispositif de transmission selon l'une des revendications 30 à 32, **caractérisé en ce que** l'état d'accouplement ancien est un état désaccouplé dans lequel un couple de rotation est transmis par le train d'engrenage (7, 207), et l'état l'accouplement nouveau est un état de prise dans lequel, en termes de transmission de couple, le train d'engrenage (7, 207) est court-circuité par le dispositif d'accouplement sélectif (18, 218).

## Patentansprüche

1. Verfahren zur Einstellung der Progressivität des Übergangs von einem alten Übersetzungsverhältnis auf ein neues Übersetzungsverhältnis in einer Getriebevorrichtung mit
- einem selektiven Kupplungsmittel (18, 118, 218) zwischen zwei rotierenden Organen,
- einem im wesentlichen nicht-gesteuerten Krafterzeugungsmittel (29, R1, 229) zur Beaufschlagung des selektiven Kupplungsmittels in Richtung eines bestimmten seiner Schlupf- und Haftzustände, der dem neuen Verhältnis entspricht,
- einem Betätigungsmittel (45, 145, 245), das das selektive Kupplungsmittel in Richtung auf den anderen dieser Zustände, der dem alten Übersetzungsverhältnis entspricht, beaufschlägt,
**dadurch gekennzeichnet, daß** das Verfahren, während das Krafterzeugungsmittel das selektive Kupplungsmittel in Richtung seines dem neuen Übersetzungsverhältnis entsprechenden Zustands beaufschlägt, einen Schritt einer solchen Steuerung des Betätigungsmittels umfaßt, daß es eine dosierte Widerstandskraft erzeugt, die den Übergang zwischen dem alten und dem neuen Übersetzungsverhältnis verlangsamt.

2. Verfahren nach Anspruch 1, **dadurch gekennzeichnet, daß** es auf eine Getriebevorrichtung angewandt wird, deren Betätigungsmittel ein Hydraulikzylinder (45, 145, 245) ist, und daß der Schritt der Steuerung durchgeführt wird, indem eine Druckkammer (46) des Zylinders selektiv mit einer Druckquelle (57) verbunden wird.

3. Verfahren nach Anspruch 2, **dadurch gekennzeichnet, daß** man die Widerstandskraft dosiert, indem man Phasen, in denen die Druckkammer (46) mit einem Entleerungskreis (151) verbunden ist, mit Phasen, in denen die Druckkammer mit der Druckquelle (57) verbunden ist, abwechseln läßt.

4. Verfahren nach einem der Ansprüche 1 bis 3, **dadurch gekennzeichnet, daß** man das Betätigungsmittel mit Hilfe von Impulsen erregt.

5. Verfahren nach Anspruch 4, **dadurch gekennzeichnet, daß** man die Kraft durch Einstellung der Breite der Impulse (PW) dosiert.

6. Verfahren nach einem der Ansprüche 1 bis 5, **dadurch gekennzeichnet, daß** man an das Betätigungsmittel (45, 145, 245) eine von einem Maximum an abnehmende Erregung gemäß einem vorbestimmten Abnahmeprofil anlegt.

7. Verfahren nach Anspruch 6, **dadurch gekennzeichnet, daß** man eine physikalische Größe (V_{E}, V_{S}) erfaßt, die der progressive Übergang vom alten Übersetzungsverhältnis auf das neue Übersetzungsverhältnis beeinflußt, und das Betätigungsmittel (45, 245) in Abhängigkeit von dem Ergebnis dieser Erfassung steuert.

8. Verfahren nach Anspruch 7, **dadurch gekennzeichnet, daß** man als physikalische Größe mindestens eine Drehgeschwindigkeit (V_{E}) erfaßt und sie mit einer anderen Drehgeschwindigkeit (V_{S}) vergleicht, bezüglich der sie sich während des Vorgangs des Übersetzungsverhältniswechsels ändert.

9. Verfahren nach Anspruch 7 oder 8, **dadurch gekennzeichnet, daß** man die Widerstandskraft in Abhängigkeit von der Abweichung eines durch die Erfassung der physikalischen Größe erhaltenen tatsächlichen Werts von einem Sollwert während des Vorgangs des Übersetzungsverhältniswechsels dosiert.

10. Verfahren nach einem der Ansprüche 7 bis 9, **dadurch gekennzeichnet, daß** man in Abhängigkeit von der erfaßten physikalischen Größe außerdem einen anderen Zustandswechsel in der Getriebevorrichtung steuert.

11. Verfahren nach Anspruch 10, **dadurch gekennzeichnet, daß** die Steuerung des anderen Zustandswechsels die Initiierung dieses anderen Zustandswechsels umfaßt, wenn die physikalische Größe eine vorbestimmte Schwelle (R_{S}) passiert hat.

12. Verfahren nach Anspruch 10 oder 11, **dadurch gekennzeichnet, daß** man bestimmt, ob der andere Zustandswechsel nach dem Wertebereich, in dem sich die physikalische Größe (R) während des Übersetzungsverhältniswechsels ändert, notwendig ist.

13. Verfahren nach einem der Ansprüche 7 bis 12, **dadurch gekennzeichnet, daß** man als physikalische Größe eine Eintrittsgeschwindigkeit (V_{E}) der Getriebevorrichtung im Verhältnis zu einer Austrittsgeschwindigkeit (V_{S}) der Getriebevorrichtung erfaßt.

14. Verfahren nach einem der Ansprüche 1 bis 13, **dadurch gekennzeichnet, daß** man das Krafterzeugungsmittel (29, 229) während des Vorgangs des Übersetzungsverhältniswechsels ohne direkte Steuerung läßt.

15. Verfahren nach einem der Ansprüche 1 bis 14, **dadurch gekennzeichnet, daß** es auf eine Getriebevorrichtung angewandt wird, in der das Krafterzeugungsmittel ein Zentrifugalmittel (29, 229) ist.

16. Verfahren nach einem der Ansprüche 1 bis 15, **dadurch gekennzeichnet, daß** das Betätigungsmittel (45, 245) auf die selektive Kupplungsvorrichtung in derselben Richtung wie eine Kraft (P_{AC}) einwirkt, die proportional zu einem in der Getriebevorrichtung übertragenen Drehmoment erzeugt wird.

17. Getriebevorrichtung für ein Fahrzeug mit
- mindestens einem Getriebe (7; 107; 207),
- einem selektiven Kupplungsmittel (18, 118, 218), das durch Übergang von einem alten Kupplungszustand in einen neuen Kupplungszustand das Getriebe von einem alten Übersetzungsverhältnis auf ein neues Übersetzungsverhältnis übergehen lassen kann,
- einem im wesentlichen nicht-gesteuerten Krafterzeugungsmittel (29, R1, 229), das das selektive Kupplungsmittel von dem alten Kupplungszustand in den neuen Kupplungszustand übergehen lassen kann,
- einem Betätigungsmittel (45, 145, 245), das auf das selektive Kupplungsmittel eine Einwirkung in Richtung auf den alten Kupplungszustand ausüben kann,
- Mittel (452) zur Steuerung des Betätigungsmittels,
**dadurch gekennzeichnet, daß** die Steuermittel (452) Progressivitätsmittel (453) umfassen, um von dem Betätigungsmittel eine dosierte Kraft ausüben zu lassen, die den unter Einwirkung des Krafterzeugungsmittels erfolgenden Übergang des selektiven Kupplungsmittels von dem alten Kupplungszustand in den neuen Kupplungszustand verlangsamt.

18. Getriebevorrichtung nach Anspruch 17, **dadurch gekennzeichnet, daß** das Betätigungsmittel ein Hydraulikzylinder (45, 145, 245) ist und die Progressivitätsmittel (453) dafür ausgelegt sind, Phasen der Entleerung und Phasen des Unterdrucksetzens einer Arbeitskammer (46) des Zylinders einander abwechseln zu lassen.

19. Getriebevorrichtung nach Anspruch 18, **dadurch gekennzeichnet, daß** der Entleerungsweg (151) des Zylinders einen hydraulischen Widerstand besitzt.

20. Getriebevorrichtung nach einem der Ansprüche 17 bis 19, **dadurch gekennzeichnet, daß** die Progressivitätsmittel (453) dafür ausgelegt sind, Impulse zu erzeugen, die mindestens indirekt an das Betätigungsmittel (45, 145, 245) angelegt werden.

21. Getriebevorrichtung nach Anspruch 20, **dadurch gekennzeichnet, daß** die Impulse von veränderlicher Impulsbreite sind.

22. Getriebevorrichtung nach Anspruch 20 oder 21, **dadurch gekennzeichnet, daß** die Progressivitätsmittel (453) selektiv kontinuierlich Impulse mit einer konstanten Breite von weniger als 100% anlegen können, um von dem Betätigungsmittel eine Kraft erzeugen zu lassen, die Bedingungen des spontanen Wechsels des Übersetzungsverhältnisses in der Getriebevorrichtung verschiebt.

23. Getriebevorrichtung nach einem der Ansprüche 17 bis 22, **dadurch gekennzeichnet, daß** die Steuermittel (452) einen Eingang besitzen, der mit Mitteln (153, 158) verbunden ist, um eine physikalische Größe zu erfassen, die von dem progressiven Wechsel des Übersetzungsverhältnisses nach seiner Initiierung beeinflußt werden kann.

24. Getriebevorrichtung nach Anspruch 23, **dadurch gekennzeichnet, daß** die Steuermittel (452) gegenüber der Änderung des Werts der physikalischen Größe empfindlich sind, um die Wirkung des Betätigungsmittels während des Übergangs vom alten Übersetzungsverhältnis auf das neue Übersetzungsverhältnis zu dosieren.

25. Getriebevorrichtung nach einem der Ansprüche 23 oder 24, **dadurch gekennzeichnet, daß** die physikalische Größe, gegenüber der die Steuermittel empfindlich sind, eine Geschwindigkeit (V_{E}) am Eintritt der Getriebevorrichtung bezüglich einer Geschwindigkeit (V_{S}) am Austritt der Getriebevorrichtung umfaßt.

26. Getriebevorrichtung nach einem der Ansprüche 23 bis 25, **dadurch gekennzeichnet, daß** die Steuermittel (452) eine Regelung der Änderung der physikalischen Größe im Verhältnis zu einem Sollwert durchführen.

27. Getriebevorrichtung nach einem der Ansprüche 23 bis 25, **dadurch gekennzeichnet, daß** die Steuermittel gegenüber der Änderung der physikalischen Größe empfindlich sind, um eine mindestens indirekte programmierte Erregung des Betätigungsmittels auszulösen.

28. Getriebevorrichtung nach einem der Ansprüche 23 bis 27, **dadurch gekennzeichnet, daß** die Steuermittel außerdem gegenüber einem Schwellenwert (RS) der physikalischen Größe empfindlich sind, um einen anderen Zustandswechsel in der Getriebevorrichtung auszulösen.

29. Getriebevorrichtung nach Anspruch 28, **dadurch gekennzeichnet, daß** sie zwei in Reihe geschaltete Getriebe (107, 207) umfaßt, daß die Kupplungsvorrichtung (218) einem ersten (207) der Getriebe zugeordnet ist, in dem der Sprung zwischen dem alten Übersetzungsverhältnis und dem neuen Übersetzungsverhältnis relativ groß ist, und daß der andere Zustandswechsel das andere Getriebe (107) betrifft, um es das Übersetzungsverhältnis in der anderen Richtung mit einem kleineren Sprung wechseln zu lassen.

30. Getriebevorrichtung nach einem der Ansprüche 17 bis 29, **dadurch gekennzeichnet, daß** das Krafterzeugungsmittel ein Zentrifugalmittel (229) ist.

31. Getriebevorrichtung nach einem der Ansprüche 17 bis 30, **dadurch gekennzeichnet, daß** das Betätigungsmittel (45, 245) so montiert ist, daß es seine Wirkung auf das selektive Kupplungsmittel (18, 218) in derselben Richtung wie ein Selbststeuermittel (132) hinzufügt, das eine Kraft (P_{AC}) erzeugt, die ein in der Getriebevorrichtung übertragenes Drehmoment abbildet.

32. Getriebevorrichtung nach Anspruch 31, **dadurch gekennzeichnet, daß** das Selbststeuermittel ein Mittel (132) ist, um auf die selektive Kupplungsvorrichtung (18, 218) eine Verzahnungsreaktionskraft (P_{AC}) in dem Getriebe (7, 207) zu übertragen.

33. Getriebevorrichtung nach einem der Ansprüche 30 bis 32, **dadurch gekennzeichnet, daß** der alte Kupplungszustand ein ausgekuppelter Zustand ist, in dem von dem Getriebe (7, 207) ein Drehmoment übertragen wird, und der neue Kupplungszustand ein Eingriffszustand ist, in dem das Getriebe (7, 207) hinsichtlich Drehmomentsübertragung durch die selektive Kupplungsvorrichtung (18, 218) kurzgeschlossen wird.

## Claims

1. A method of adjusting progressiveness of a change from an old transmission ratio to a new transmission ratio, in a transmission device comprising:
- a device for selective coupling (18, 118, 218) between, two rotary members;
- an essentially uncontrolled force generator means (29, R1, 229) for urging the selective coupling means towards a predetermined one of its slipping and gripping states, corresponding to the new ratio;
- an actuating means (45, 145, 245) capable of urging the selective coupling means towards the other of the said states, corresponding to the old ratio;
**characterised in that** the method comprises, whilst the generator means is actuating the selective coupling means towards its state corresponding to the new ratio, a step of controlling the actuating means so that it produces a measured resistant force, slowing down the transition between the old ratio and the new ratio.

2. A method according to Claim 1, **characterised in that** it is applied to a transmission device whose actuating means is a hydraulic actuator (45, 145, 245), and **in that** the control step is performed by selectively connecting a pressure chamber (46) of the actuator with a pressure source (57).

3. A method according to Claim 2, **characterised in that** the said resistant force is adjusted by alternating phases in which the pressure chamber (46) is connected with a drain circuit (151) and phases during which the pressure chamber is connected with the source (57).

4. A method according to one of Claims 1 to 3, **characterised in that** the actuator is excited by means of pulses.

5. A method according to Claim 4, **characterised in that** the force is adjusted by regulating the width of the pulses (PW).

6. A method according to one of Claims 1 to 5, **characterised in that** there is applied to the actuating means (45, 145, 245) an excitation which decreases from a maximum and according to a predetermined decreasing profile.

7. A method according to Claim 6, **characterised in that** there is detected a physical value (V_{E}, V_{S}) which is affected by the progressive change from the old transmission ratio to the new transmission ratio, and **in that** the actuating means (45, 245) is controlled as a function of the result of this detection.

8. A method according to Claim 7, **characterised in that** there is detected as a physical value at least one speed of rotation (V_{E}) and **in that** it is compared with another speed of rotation (V_{S}) with respect to which it varies during the ratio change process.

9. A method according to Claim 7 or 8, **characterised in that** the resistant force is adjusted according to the difference between a real value obtained by the detection of the physical value and a command value during ratio change process.

10. A method according to one of Claims 7 to 9, **characterised in that**, furthermore, another change of state in the transmission device is controlled according to the detected physical value.

11. A method according to Claim 10, **characterised in that** the control of the other change of state comprises the initiation of the said other change of state when the physical value has passed through a predetermined threshold (R_{S}).

12. A method according to Claim 10 or 11, **characterised by** determining if the said other change of state is necessary according to the range of values within which the physical value (R) evolves during the change of ratio.

13. A method according to one of Claims 7 to 12, **characterised in that** there is detected, as a physical value, an input speed (V_{E}) of the transmission device in comparison with an output speed (V_{S}) of the transmission device.

14. A method according to one of Claims 1 to 13, **characterised in that**, during the ratio change process, the force generator means (29, 229) is left without direct control.

15. A method according to one of Claims 1 to 14, **characterised in that** it is applied to a transmission device in which the force generator means is of the centrifugal type.

16. A method according to one of Claims 1 to 15, **characterised in that** the actuating means (45, 245) acts in the same sense on the selective coupling device as a force (P_{AC}) produced in proportion with a torque transmitted in the transmission device.

17. A transmission device for a vehicle, comprising:
- at least one gear train (7; 107, 207) ;
- a selective coupling means (18, 118, 218) able, by changing from an old coupling state to a new coupling state, to cause the gear train to change from an old transmission ratio to a new transmission ratio;
- an essentially uncontrolled force generator means (29, R1, 229) capable of causing the selective coupling means to change from the old coupling state to the new coupling state;
- an actuating means (45, 145, 245) capable of applying to the selective coupling means an action tending to force it towards the old coupling state;
- control means (452) for controlling the actuating means;
**characterised in that** the control means (452) comprise progressiveness means (453) for causing the actuating means to apply a measured amount of force slowing down the change of the selective coupling means from the old coupling state to the new coupling state under the action of the force generator means.

18. A transmission device according to Claim 17, **characterised in that** the actuator means is a hydraulic actuator (45,145, 245), and **in that** the progressiveness means (453) are designed to alternate phases of draining and phases of pressurising a working chamber (46) of the actuator.

19. A transmission device according to Claim 18, **characterised in that** the drain path (151) of the actuator is hydraulically resistant.

20. A transmission device according to one of Claims 17 to 19, **characterised in that** the progressiveness means (453) are designed to generate pulses applied at least indirectly to the actuating means (45, 145, 245).

21. A transmission device according to Claim 20, **characterised in that** the pulses have a variable pulse width.

22. A transmission device according to Claim 20 or 21, **characterised in that** the progressiveness means (453) are capable of selectively applying in a continuous manner pulses of a constant pulse width less than 100% in order to cause the actuator to produce a force which offsets spontaneous change of transmission ratio conditions in the transmission device.

23. A transmission device according to one of Claims 17 to 22, **characterised in that** the control means (452) have an input connected to means (153, 158) for detecting a physical value capable of being affected by the progressive change in the transmission ratio after its initiation.

24. A transmission device according to Claim 23, **characterised in that** the control means (452) are responsive to evolution of the magnitude of said physical value in order to adjust action of the actuating means during the change from the old ratio to the new ratio.

25. A transmission device according to one of Claims 23 or 24, **characterised in that** the physical value to which the control means are responsive comprises an input speed of the device (V_{E}) in comparison with an output speed of the device (V_{S}).

26. A transmission device according to one of Claims 23 to 25, **characterised in that** the control means (452) carry out a servo-control of the variation of the physical value with respect to a command.

27. A transmission device according to one of Claims 23 to 25, **characterised in that** the control means are responsive to evolution of the physical value in order to initiate a programmed, at least indirect, energisation of the actuator means.

28. A transmission device according to one of Claims 23 to 27, **characterised in that** the control means are furthermore responsive to a threshold value (R_{S}) of the physical value in order to initiate another change of state in the transmission device.

29. A transmission device according to Claim 28, **characterised in that** it comprises two gear trains (107, 207) fitted in series, **in that** the coupling device (218) is associated with a first (207) of the gear trains in which the jump between the old ratio and the new ratio is relatively large, and **in that** said other change of state relates to the other gear train (107) in order to cause a change of ratio therein, in the other direction and with a smaller jump.

30. A transmission device according to one of Claims 17 to 29, **characterised in that** the force generator means is a centrifugal means (229).

31. A transmission device according to one of Claims 17 to 30, **characterised in that** the actuating means (45, 245) is fitted in such a way as to add its action to the selective coupling means (18, 218) in the same sense as an auto-control means (132) producing a force (P_{AC}) representative of a torque transmitted in the transmission device.

32. A transmission device according to Claim 31, **characterised in that** the auto-control means is a means (132) of transmitting to the selective coupling means (18, 218) a tooth reaction force (P_{AC}) in the gear train (7, 207).

33. A transmission device according to one of Claims 30 to 32, **characterised in that** the old coupling state is an uncoupled state in which a rotational torque is transmitted by the gear train (7, 207), and the new coupling state is a state of engagement in which, in terms of torque transmission, the gear train (7, 207) is short-circuited by the selective coupling device (18, 218).
